# EUROPEAN PATENT APPLICATION

(11) **EP 1 666 741 A1**
(43) Date of publication of application: **07.06.2006**
(21) Application number: 04747592.6
(22) Date of filing: 15.07.2004
(51) Int. Cl.: F16B 35/04

(54) **BLIND BOLT AND BLIND NUT**

(30) Priority: 19.08.2003 JP 2003207794
(71) Applicant: Koyokizai Co. Ltd., Sapporo-shi, Hokkaido 007-0803 (JP)
(72) Inventor: ITO, Katsuo, Sapporo-shi Hokkaido 0050022 (JP)
(74) Representative: Viering, Jentschura & Partner
(86) International application number: PCT/JP2004/010126
(87) International publication number: WO 2005/017374

(57) **Abstract**

A blind bolt and a blind nut which can reduce the number of components and production costs, require no support shaft penetrating therethrough, roratably support a locking piece and a nut thereof having a remarkably readily-processible structure, and support them against failure to obtain a higher fastening strength.

The blind bolt includes a bolt main body 2 having an oblong hole 22. and a locking piece 3 rotatably supported within said oblong hole 22. The locking piece 3 is provided with a pair of rotary protrusions 35 and a pair of piece holding protrusions 36, projecting outwardly, respcetively. Said oblong hole 22 includes a pair of rotation supporting grooves 27 to accommodate said rotary protrusions 35 and support rotary motion, and a pair of piece, holding grooves 28 to accomodate said piece holding protrusions 36.

## Description

### Technical Field

The present invention relates to a blind bolt and a blind not which are used to fasten a material to a beam or to a member inside, or with a back side inaccessible for mounting.

### Background Art

Conventionally, blind bolts and blind nuts have been used to fasten a material to a wall, or to a member inside or with a back side inaccessible for mounting. For example, a threaded pin such as that disclosed in Japanese Unexamined Patent Publication No. 11-311229 rotatably supports a locking piece by a support shaft in a pin main body having a male screw part at one end thereof, and secures the end to both the locking piece and the support shaft by loosely fitting a spring into said support shaft. In addition, said spring energizes the locking piece in such a manner as being sprung out from the pin main body for the use of extending even in a vertical direction.

Meanwhile, Japanese Utility Model Application No. 53-145000 discloses a simplified inserting bolt having a rotary locking piece with a rotatable axis. In this inserting bolt, there is provided shaft holes in a locking place and a bolt groove, surface thereof, respectively, wherein a sliding ball is fitted. Consequently, the rotation of the sliding ball will cause the locking piece to move on the axis of the bolt, thereby moving the locking piece until it abuts to the bolt end.

### Disclosure of the invention

### Problems to be resolved by the invention

However, the invention as disclosed in Japanese Unexamined Patent Publication No. 11-311229 has the following problems:
(1) The support shaft, which is designed to support the locking piece, receives a fastening force by a fastened nut. In fact, the support shaft is remarkably lower in strength than the locking piece and a bolt, and the structure is prone to shear force, resulting in insufficient strength in the whole structure.
(2) Even though the support shaft sliglitly deforms or bends, the locking piece may not be rotated for use.
(3) If the outside diameter of the support shaft is determined larger to obtain more strength, the locking piece may be subject to breakage due to stress concentration in the shaft hole therethrough.
(4) Since the bolt main body and the locking piece are made of high-strength and hard materials, more processing like cutting works for the shaft hole will require increasing production costs. In particular, since the bolt described above requires a processing to link both ends of the spring to the locking piece and the pin main body, production costs will further grow.

On the other hand, the invention disclosed in Japanese Utility Model Application No. 53-145060 has the following problems.
(1) Since the sliding ball is designed not to separate from the shaft hole of the bolt, shaft holes are required to be perforated long enough to move the looking piece on both sides of the bolt groove. Therefore, more processing like cutting works, which grow production costs, will also reduce the bolt strength.
(2) To fit the sliding ball into the shaft hole of the bolt, one end of the bolt must be divided into two portions. In addition, since a sliding groove is formed through almost the entire length of the bolt and a longitudinal shaft hole is provided on the side thereof, the reduction in bolt strength and increasing production costs will become more severe.

It is, therefore, one object of the present invention to solve the aforementioned problems by providing a blind bolt and a blind nut which can reduce the number of components and production costs, require no support shaft penetrating therethrough, coratably support a locking piece and a nut with a remarkably readily-processible structure, and support them against failure to obtain a higher fastening strength.

### Means for solving the problem

The blind bolt of the present invention is characterized by a bolt main body having a male screw part at one end and an oblong hole provided on the axis thereof at the other end, and a locking piece to be accommodated into said oblong hole when the axis of the bolt main body is matched to the long side of the locking piece. The locking piece is provided on edges of the long sides thereof with a pair of rotary protrusions projecting outwardly in a width direction of the oblong hole, and on edges of the long sides opposite the long sides having the rotary protrusions, a pair of piece holding protrusions is formed so as to project outwardly in a width direction of the oblotig hole arranged at spaced longitudinal intervals from said rotary protrusions. On edges opposite the axis of one of the two oblong holes formed in said bolt main body, a pair of rotation supporting grooves is provided so as to accommodate said rotary protrusions and support rotary motion, while a pair of piece holding grooves is provided on edges opposite the axis of the other oblong hole to accommodate said piece holding protrusions.

Preferably, in the present invention, to smoothly rotate the locking piece within the oblong hole, the rotation supporting grooves of the bolt main body are formed in a longitudinal shape axially extending towards the piece holding grooves from the position of one of the rotary protrusions, with the locking piece being accommodated in the oblong hole, and said rotation supporting grooves are provided with an inclined plane so as to smoothly separate said rotary protrusions.

Moreover, in this invention, it is desirable that the bolt main body be provided with a stepped part on the top end of the oblong hole, and the locking piece has a convex shape to be adapted to said stepped part, with being placed into said oblong hole.

The blind nut of the present invention is characterized by a nut main body having a female screw hole passing through a nearly central portion thereof, and a nut frame body to accommodate said nut main body between a pair of arms extending parallel to each other and orthogonal to a flange having a bolt inserting hole when the longitudinal direction of the arms is matched to that of said nut main body. The nut main body is provided on edges of the long sides thereof with a pair of rotary protrusions projecting to be locked to the arms in the direction which is orthogonal thereto and on edges of the long sides opposite the edges with the rotary protrusions, a pair of nut holding protnisions is formed so as to project to be locked to the arms in the direction which is orthogonal thereto arranged at spaced longitudinal intervals form said rotary protrusions. When the longitudinal direction of the nut main body is matched to that of the arms of said nut frame body to accommodate the nut main body, and on edges of each arm to which said rotary protrusions abut, a pair of rotation supporting grooves are provided to accommodate said rotary protrusions and support rotary motion, while a pair of nut holding grooves is provided on edges of each arm to which said nut holding protrusions abut to accommodate said nut bolding protrusions.

Additionally, in this invention, it is preferable to rotate the nut main body until the long side is orthogonal to the axis of the nut frame body, the longitudinal distance between one of the rotary protrusions and the corresponding one of the nut holding protrusions of said nut main body is set larger than the maximum width of the arm of the nut frame body,

### Advantageous effect of the invention

Accordingly, since the present invention as described above requires no support shaft to pass through a bolt and a nut, a fastening strength is not determined by such a shaft, and it may support them against failure to ensure a higher fastening strength. In addition, since the press-worked rotary protrusions are designed to rotate on the grooves, it may bo remarkably easy to process products with reduced number of components and production costs.

### Best mode for carrying out the invention

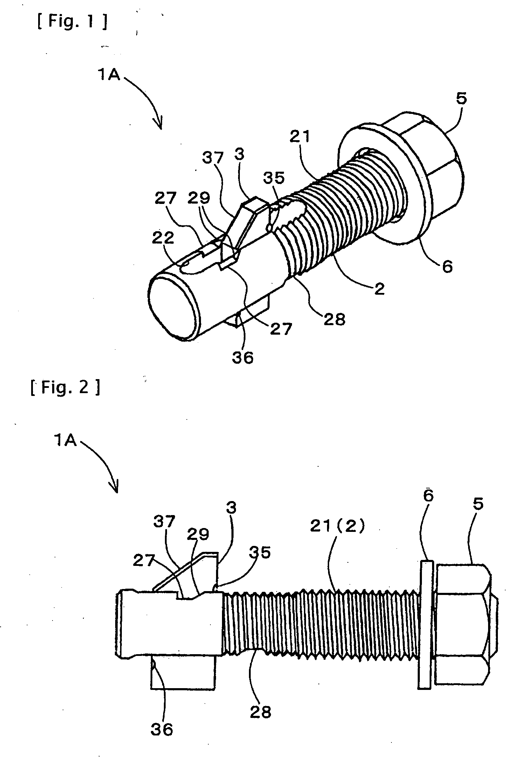

Preferred embodiment of the present invention will be described with reference to the accompanying drawings. Referring to Figures 1 to 5, a blind bolt 1A of the first embodiment includes a bolt main body 2 having a male screw part 21 provided at one end thereof and an oblong hole 22 formed on the axis thereof at the other end, the oblong hole 22 rotatably holding a locking piece 3 to lock a beam X. In addition, the male screw part 21 of the bolt main body 2 is screwed through a washes 6 into a nut 5, thereby fastening a member Y to the beam X, together with the nut 5 and said locking piece 3.

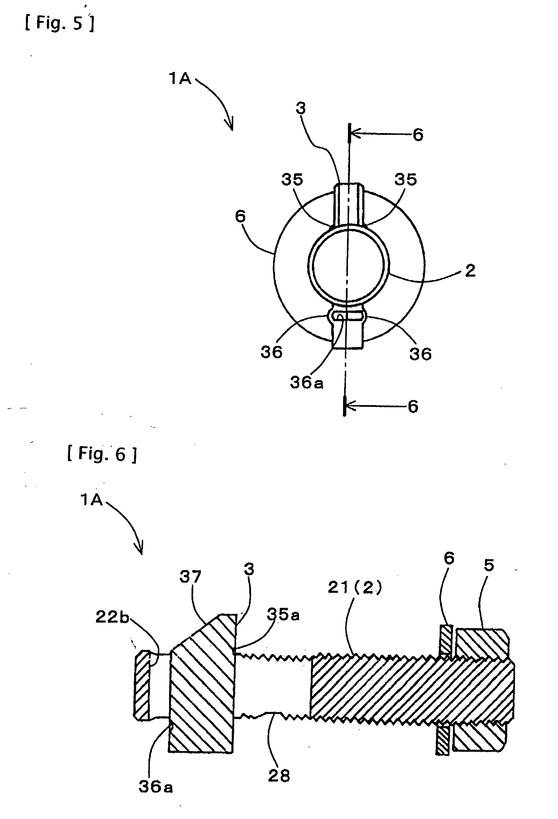

Each component shown in the first embodiment will be described in further detail. Referring to Figures 1 to 3, there is shown a pair of rotation supporting grooves 27, 27 provided along the oblong hole 22 of the boll main body 2 so as to face with each other on edges of one opening of the oblong hole 22 on the axis thereof The locking piece 3 is made in the form of a nearly rectangular solid, and on edges of the long sides thereof, a pair of rotary protrusions 35, 35 is provided so as to be accommodated in the rotation supporting grooves 27, 27. These press-worked rotary protrusions 35, 35 include a shallow pressed groove 35a as shown in Figure 6. When the locking piece 3 is accommodated in the oblong hole 22, the rotary protrusions 35, 35 project into both sides of the oblong hole 22 in a width direction to be fixed into said rotation supporting grooves 27, 27 thereby being rotatably supported thereon.

Additionally, the rotary protrusions 35, 35 are formed off the center of the long side of the locking piece 3, whereby the locking piece 3 may rotate downwardly by gravitation. Obviously, the rotary protrusions 35, 35 may be formed in the center of the long side of the piece 3 if the lacking piece 3 rotates by gravitation.

As illustrated in Figures 4 and 5, the looking piece 3 includes a pair of piece holding protrusions 36, 36 formed on edges of the long sides thereof opposite the long side having the rotary protrusions 35, 35. The piece holding protrusions 36, 36 prevent the locking piece 3 from coming loose towards the side of the rotary protrusions 35, 35. The piece holding protrusions 36, 36 are formed so as to protrude into both sides of the oblong hole 22 in a width direction by means of press-working. The locking piece 3 is provided with a shallow pressed groove 36a as shown in Figures 5 and 6.

In the meantime, a pair of piece holding grooves 28, 28 is formed so as to accommodate the piece holding protrusions 36, 36. The piece holding protrusions 36, 36 are arranged at spaced longitudinal intervals from the rotary protrusions 35, 35. As shown in Figure 6, the longitudinal length between one of the rotary protrusions 35, 35 and the corresponding one of piece holding protrusions 36, 36 is given as over a depth of the oblong hole 22, or the interval between upper and lower openings. Thus the locking piece 3 not only can be held within the bolt main body 2, but also can rotate by a pushing force thereon from the beam X until the long side of the locking piece 3 is orthogonal to the axis of the bolt main body 2.

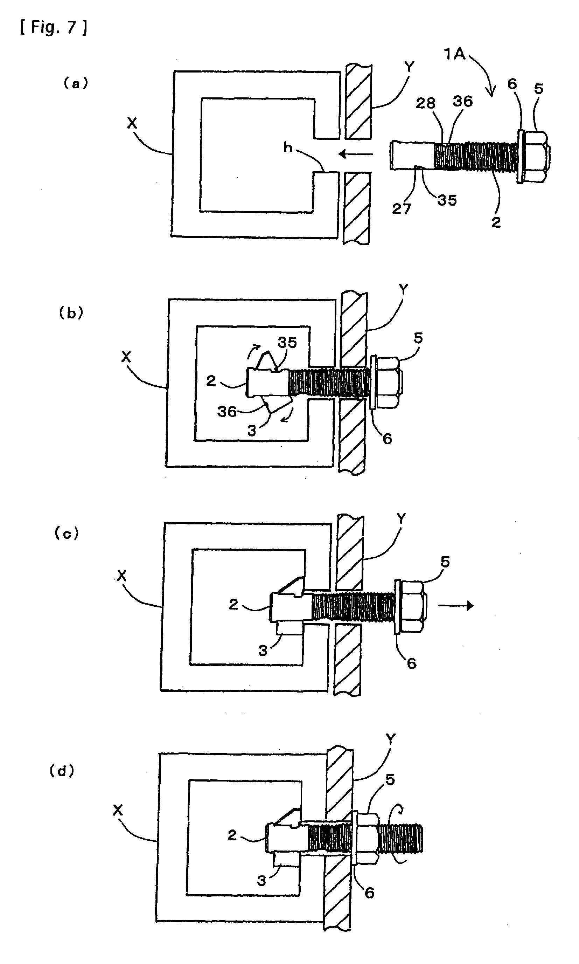

Referring to Figure 7 (a), tho locking piece 3 is formed so as to be entirely accommodated into the oblong hole 22 when the longitutinal direction thereof. is matched to the axis of the bolt main body 2. Both edges of the locking piece 3 are defined to project from the outer periphery surfaces of the bolt main body 2 when the long side of the locking piece 3 is orthogonal to the axis of the bolt main body 2.

Meanwhile, it is preferable to make the longitudinal length of the oblong hole 22 shosker in light of bolt strength and costs for processing and materials. Consequently, referring to Figures 1, 2 and 6. there is shown the looking piece 3 including a chamfer 37, a linearly chamfered part thereof opposite the end inner surface 22b of the oblong hole 22, thereby saving space for rotating an angular part of the locking piece 3 within the oblong hole 22. Advantageously, this embodiment may shorten the axial length of the oblong hole 22 by providing the chamfer 37 for the locking piece 3.

To further shorten the axial length or the oblong hole 22, the locking piece 3 is designed to rotate backwardly towards the male screw part 21 to provide a smaller space for rotating said locking piece 3. In the first embodiment, the distance between one of the rotation supporting grooves 27, 27 and the end inner surface 22b of the oblong hole 22 is set less than a short side of the locking piece 3, and an inclined plane 29 is formed on the bolt main body 2 to smoothly separate the rotary protrusions 35, 35 from the rotation supporting grooves 27, 27. Thus, the locking piece 3 can move backwardly sliding on the inclined plane 29 by rotary momontum and a reaction force from the end inner surface 22b as the locking piece 3 rotates by gravitation. On the other band, when the beam X applies a pushing force to the locking piece 3 towards the bolt top end as the not 5 is fastened, the locking piece 3 rotates sliding on the inclined plane 29 to move backwardly. Therefore, the oblong hole 22 can be axially cut by the length of backward movement of the locking piece 3, which would otherwise rotate the rotary protrusions 35, 35 merely within the rotation supporting grooves 27, 27,

Referring to Figure 7, a preferred application of the blind bolt 1A of the first embodiment will be described in detail.

In order for the blind bolt 1A in the first embodiment to secure the inember Y to the beam X, the inside of which is inaccessible for mounting, the beam X and the member Y are first perforated to provide a prepared hole h therein to link to each other. Subsequently, the locking piece 3 is completely accommodated within the oblong hole 22 of the bolt main body 2. For this purpose, by turning the piece holding grooves 28, 28 of the bolt main body 2 upwardly so as to accommodate the piece holding protrusion 36, 36 of the locking piece 3 therein and the rotary protrusions 35, 35 in the rotation supporting grooves 27, 27, the long side of the locking piece 3 is matched to the axis of the bolt main body 2. Then, since an end at the side of the of the piece holding grooves 28, 28 of the locking piece 3 is locked being abutted to an end inner surface at the male screw part 21 of the oblong hole 22, the locking piece 3 will not rotate, with being accomodated within the oblong hole 22. As shown in Figures 7 (a) and (b), the bolt: main body 2 is inserted into the prepared hole h to dispose the locking piece 3 inaido the beam X, the locking piece 3 being completely accommodated within the oblong hole 22.

Afterwards, the bolt main body 2 is rotated around the axis approximately at an angle of 180 degrees so as to turn the rotation supporting grooves 27, 27 upwardly. Thus, the locking piece 3 pivots about the rotary protrusions 35, 35 by gravitation within the rotation supporting grooves 27, 27 (as shown in Figure 7 (b)), thereby projecting both longitudinal ends thereof from the oblong hole 22.

Accordingly, by pulling hack the bolt main body 2 as shown in Figure 7(c), the locking piece 3 projected from the oblong hole 22 of the bolt main body 2 is abutted and axially pushed against an internal surface of the beam X, whereby the locking piece 3 rotates until the long side thereof is orthogonal to the axis of the bolt main body 2. Meanwhile, the rotary protrusions 35, 35 slide on the inclined plane 29 to separate from the rotation supporting grooves 27, 27. As shown in Figure 7 (d), the nut 5 is fastened between the looking piece 3 and the washer 6 for securing the member Y to the beam X.

In the first embodiment described above, since the rotary protrusions 35, 35 are placed on the rotation supporting grooves 27, 27 for rotation, no rotating shaft as employed in conventional inventions is necessary. Consequently, reduced number of components and unaccessary cutting work for inserting a shaft will save production processes and costs. Moreover, since the locking piece 3 can readily move within the oblong hole 22, the space therefor can be saved, resulting in improved fastening strength and reduced processing and material costs. Additionally, no use of springs for rotating the locking piece 3 may prevent the locking piece 3 from springing out from the oblong hole 22 while the bolt main body 2 is inserted into the prepared hole h, Therefore, even though there is space between the beam X and the member Y, the locking piece 3 will not spring or get stuck into the space.

The embodiment of the blind bolt 1A according to the present invention is not intended as a definition of the limits of the above described first embodiment, but may be modified accordingly. For example, to accommodate the locking piece 3 into the oblong hole 22 when the bolt main body 2 is inserted into the prepared hole h, file oblong hole 22 may be positioned horizontally, rather than being provided with the piece holding protrusion 36, 36.

In an altered embodiment, the locking piece 3 may be provided with the rotary protrusions 35, 35 and the piece holding protrusion 36, 36 in alternate positions thereof. However, since the locking piece 3 comes closer to the male screw part 21 after it completes rotation, the thickness of a fastened member will be smaller.

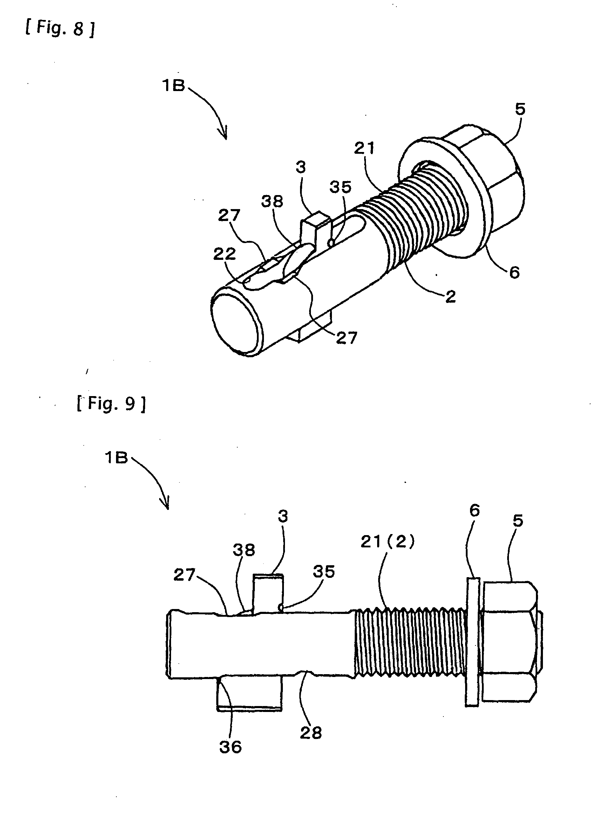

Next, referring to Figures 8 to 14, there is described a blind bolt 1B in the second embodiment of this invention. If components in the second embodiment are the same or equal to those in the first embodiment, the above described notes are used to denote counter parts.

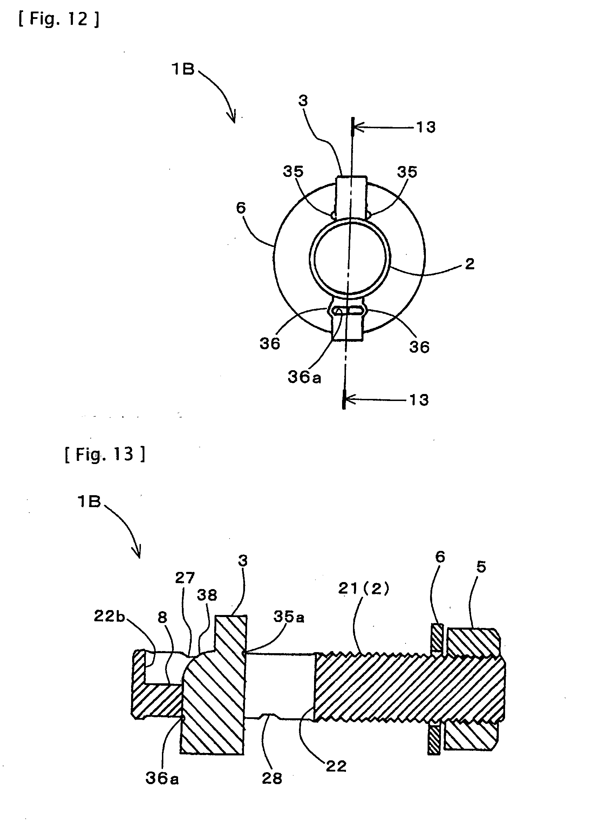

The blind bolt. 1B in the second embodiment is characterized by a stepped part 8 formed on an end inner surface 22b of an oblong hole 22 as shown in Figure 13, in addition to the features described in the first embodiment. Since a fastening position on a member is determined by abutting a locking piece 3 to the stepped part 8, the position comes closer to a male screw part 21 than the bolt main body 2 without such a step. Therefore, the stepped part 8 is designed to reduce the length of the male screw part 21 of a bolt main body 2 projected from a surface of a nut 5. As shown in Figure 13, the stepped part 8 is formed on the end inner surface 22b at the bolt top end within the oblong hole 22 under the axis thereof.

On the other hand, since the locking piece 3 is required to be completely accommodated within the oblong hole 22, it is formed so as to be adapted to the stepped part 8. Referring to Figures 8 and 13, the locking piece 3 is provided with a curved surface 38 by cutting the face thereof in contact with said stepped part 8 for smooth rotation.

As in the first embodiment, there is provided the locking piece 3 having rotary protrusions 35, 35 and piece holding protrusion 36, 36 to be accommodated in rotation supporting grooves 27, 27 and piece holding grooves 28, 28 formed on the bolt main body 2, respectively. Since the curved surface 38 may prevent smooth rotation of the locking piece 3 when it is abutted to the stepped part 8, the rotation supporting grooves 27, 27 are axially formed in a longitidunal shape. Consequently, the rotary protrusions 35, 35 of the locking piece 3 can move backwardly on the rotation supporting grooves 27, 27 towards the male screw part 21, whereby the curved surface 38 can smoothly separate from the stepped part 8.

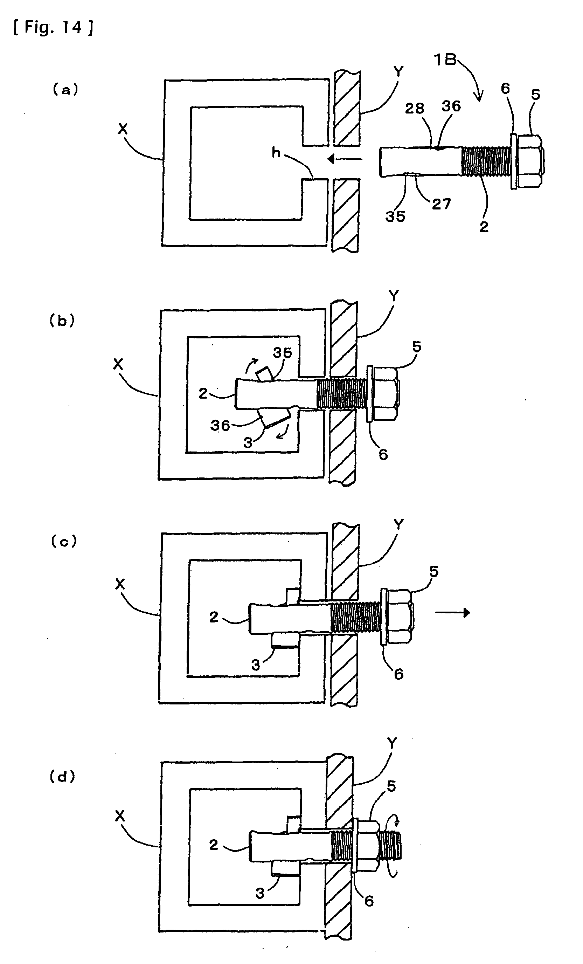

Next, referring to Figure 14, a preferred application of the blind bolt 1B of the second embodiment will be described in detail.

If a member Y is secured to a beam X, the inside of which is inaccessible for mounting by means of the blind bolt 1B according to the second embodiment of this invention, the locking piece 3 is completely accommodated within the oblong hole 22 as shown in Figure 14 (a), and the bolt main body 2 is inserted into a prepared hole h to dispose the locking piece 3 inside the beam X.

Further, as shown in Figure 14 (b), when the bolt main body 2 is pivotally rotated approximately at an angle of 180 degrees to turn the rotation supporting grooves 27, 27 upwardly, the locking piece 3 rotates about the rotary protrusions 35, 35. Subsequently, the locking piece 3 slides the rotary protrusions 35, 35 on the rotation supporting grooves 27, 27 towards the male scrow part 21. At the same time, the locking piece 3 rotates as the curved surface 38 slides in contact with the stepped part 8, thereby projecting both ends thereof from the outer periphery surfaces of the oblong hole 22. Pulling back the bolt main body 2 outwardly towards the prepared hole h provides a pushing force for the locking piece 3 from the internal surface of the beam X. This pushing force rotates the locking piece 3 until the long side thereof is completely orthogonal to the axis, whereby as shown in Figure 14(c), the locking piece 3, whose long sides are placed orthogonal to the axis, is abutted to the stepped part 8. Referring to Figure 14(d), fastening the nut 5 secures the member Y to the beam X.

As described above in the second embodiment, since the locking piece 3 is abutted to the stepped part 8 in the oblong hole 22 to fasten the member Y to the beam X in addition to the features described in the first embodiment, the bolt main body 2 may be inserted inwardly towards the beam X by the axial length of the stepped part 8. This means that the length of the male screw part 21 projected from the surface of the nut 5 can be cut when the nut 5 is fastened. Therefore, reduced protrusion of the male screw part 21 may generate no injury and improve the appearance of the work.

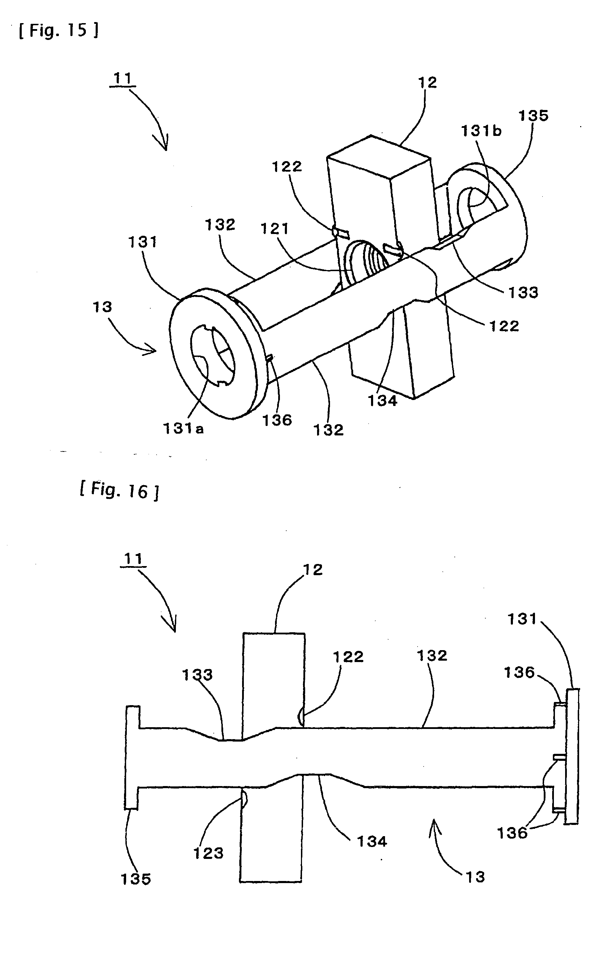

Referring to Figures 15 to 21, the blind mit 11 of a third embodiment of the present invention will be described in detail.

The blind nut 11 of the third embodiment is characterized by having no rotating shaft for a nut main body 12 and disposing protrusions within grooves for rotating the nut. In addition, if the nut main body 12 normally receives force energized by springs and others, it will get stack into space between beam X and a member Y. The third embodiment aids in overcoming this type of problem.

As shown in Figure 15, the blind nut 11 of the third embodiment includes the out main body 12 having a female screw hole 121 in a nearly central portion thereof and a nut frame body 13 for accommodating the nut main body 12. The nut frame body 13 is provided with a pair of arms 132, 132 extending parallel to each other and orthogonal to a flange 131 having a bolt inserting hole 131a.

Referring to Figures 15 to 17, the nut main body 12 is formed in the shape of nearly rectangular solid, and on edges of the long sides thereof a pair of rotary protrusions 122, 122 is formed by means of press-working. These rotary protrusions 122, 122 are designed to project on both sides outwardly so that they are hooked onto the arms 132, 132 to accommodate the nut main body 12 by matching the long side thereof to the longitudinal direction of the arms 132, 132. On the other hand, the nut frame body 13 is provided with a pair of rotation supporting grooves 133, 133 on upper edges of said arms 132, 13.2 to which the rotary protrusions 122, 122 abut when the nut main body 12 is contained between the pair of arms 132, 132, whereby the rotation supporting grooves 133, 133 accommodate the rotary protrusions, 122, 122 and support rotary motions of the locking piece 3.

In addition, the rotary protrusions 122, 122 are formed off the conter of the nut main body 12 in the longitudinal direction, whereby the mit main body 12 rotates by gravitation. Obviously, if the nut main body 12 rotates by gravitation, the rotary protrusions 122, 122 may be provided in the center thereof in the longitudinal direction.

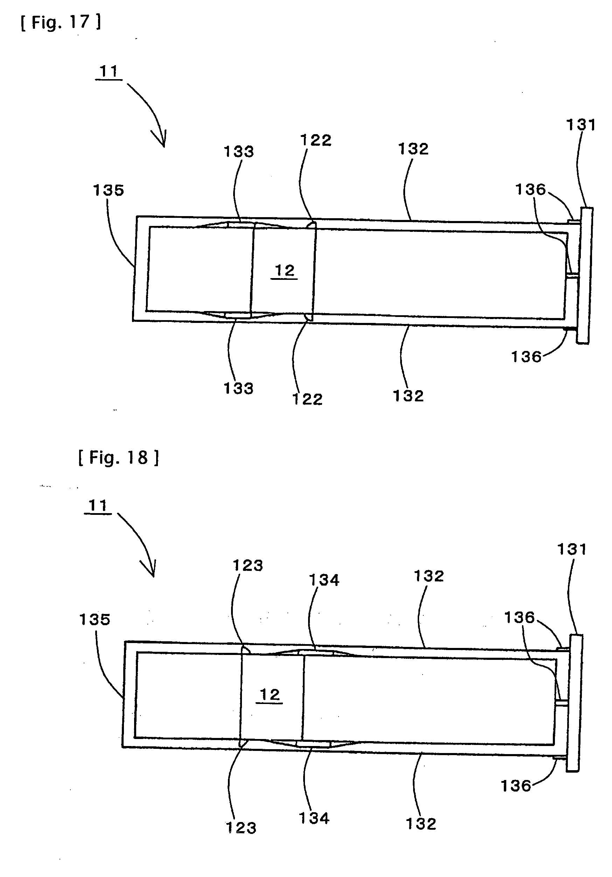

Moreover, on the nut main body 12 as shown in Figures 16 and 18, not holding protrusions 123, 123 are formed by means of a press-working process on edges of the long sides thereof opposite the long sides having the rotary protrusions 122, 122. The nut holding protrusions 123, 123 project on both sides towards the direction which is orthogonal to the arms 132, 132, as in the case or the rotary protrusions 122, 122.

On the other hand, the nut frame body 13 is provided with nut holding grooves 134, 134 for accommodating the nut holding protrusions 123, 123 when the nut main body 12 is contained into the arms 132, 132. The nut holding protrusions 123, 123 and the rotary protrusions 122, 122 are formed being spreed at a required interval in the longitudinal direction. This interval is determined as more than the height of the arms 132, 132 as shown in Figure 16, thereby holding the out main body 12 between the arms 132, 132 and rotating the mit main body 12 until its longitudinal direction is orthogonal to that of the arms 132, 132.

Additionally, Figure 15 illustrates a circular frame 135 formed opposite the female screw hole 121. of the nut main body 12 on top ends of the arms 132, 132. This circular frame 135 is provided with a bolt inserting hole 131b in a nearly central portion thereof. The center line on which the bolt inserting hole 131a of the flange 13 and the bolt inserting hole 131b of the circular frame 135 face each other is formed in the longitudinal direction of the arms 132, 132. Also, there is provided a corotation preventing protrusion 136 at equally spaced intervals on the exterior periphery of the arms 132, 132 at the side of the flange 131.

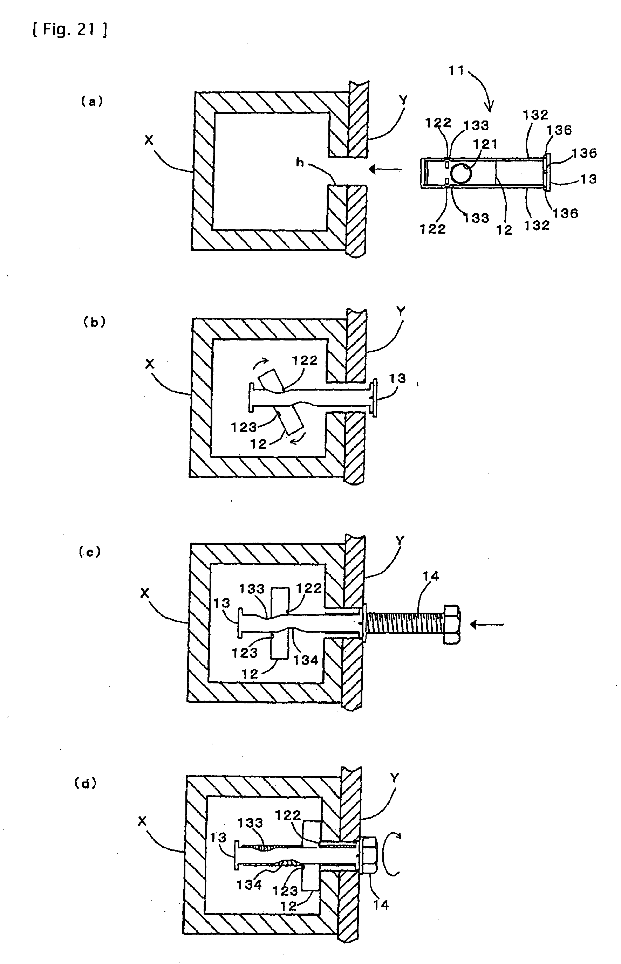

Meantime, referring to Figure 20, the female screw hole 121 of the nut main body 12 is in a nearly straight line through the center of the bolt inserting hole 131a of the flange 131 and the bolt inserting hole 131b of the circular frame 135 when the nut main body 12 is orthogonal to the arms 132, 132. Consequently, as a bolt 14 is inserted from the bolt inserting holes 131 of the flange 131, it passes through the female screw hole 121 of the nut main body 12. Referring to Figure 20, the female screw hole 121 is provided with a bolt guide hole 124 having no female screw therein at one side for bolt-inserting to guide the bolt 14.

Referring to Figure 21, a preferred application of the blind nut 11 of the third embodiment will be described in detail.

When a member Y is secured to a beam X, the inside of which is inaccessible for mounting, the beam X and the member Y are perforated to provide a prepared hole h therein to link to each other. Subsequently, turn the arms 132, 132 to completely accommodate the not main body 12 therebetween. At this time, the rotary protnisions 122, 122 and the nut holding protrusions 123, 123 of the not main body 12 are placed in the rotation supporting grooves 133, 113 and the aut holding grooves 134, 134 of the nut frame body 13, respectively. The nut main body 12 will not rotate since it is placed on the upper surface of the lower arm 132. As shown in Figure 21 (a), the nut frame body 13 is inserted into the prepared hole h to dispose the nut main body 12 inside the beam X, with the out main body 12 being accommodated between the arms 132, 132.

Afterwards, the nut frame body 13 is rotated around the axis at approximately right angles so as to turn the rotation supporting grooves 133, 133 upwardly, whereby the nut main body 12, as shown in Figure 21 (h), rotates about the rotary protrusions 122, 122 by gravitation and project both ends of the long sides thereof above and below the arms 132, 132.

In this manner, referring to Figure 21 (c), after the nut main body 12 rotates until it can be locked, the bolt 14 is inserted from the bolt inserting hole 131a of the flange 131 to guide the top end of the bolt 14 through the female screw hole 121 by the bolt guide hole 124 of the boll main body 12. Further, as the bolt 14 is screwed into the female screw part 121, it rotates until the long side of the nut main body 12 is orthogonal to the longitudinal direction of the arms 132, 132. Then, the corotation preventing protrusion 136 is locked on to the prepared hole h, resulting in no corotation of the nut frame hody 13 accompanied by rotation of the bolt 14. Next, by further screwing the bolt 14, the nut main body 12 approaches the internal surface of the beam X to he abutted thereto, whereby the member Y is secured to the beam X as shown in Figure 21 (d).

Since the rotary protrusions 122, 122 are designed to rotate on the rotation supporting grooves 133, 133 according to the third embodiment of this invention as described above, the nut main body 12 is not required to include any rotating shaft. Therefore, the increase in a fastening strength of the nut main body 12 may not be influenced by the axial strength, and the number of components may be lowered. Moreover, cutting processes for inserting a shaft may be eliminated, resulting in remarkably reduced production costs. Additionally, no use of springs in this invention may prevent the nut main body 12 from springing out, and when the blind nut 11 is inserted into the prepared hole h, the nut main body 12 will not get stuck in space between the beam X and the member Y.

The embodiment of the blind nut 11 according to the present invention is not intended as a definition of the limits of the above described embodiment, but may be modified accordingly.

### BERIEF DESCRIPTION OF THE DRAWINGS

Figure 1 is a perspective view of a first embodiment of the blind bolt according to the present invention;
Figure 2 is an elevation of the first embodiment of the blind bolt according to the present invention;

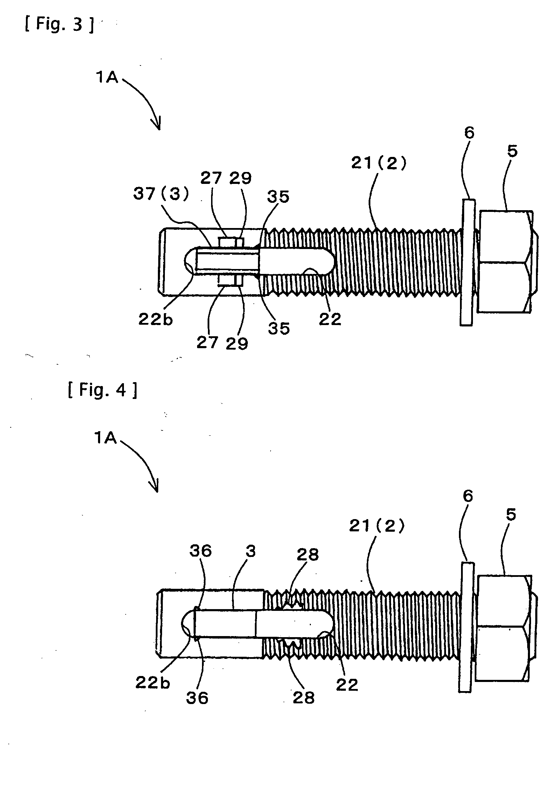

Figure 3 is a plan view of the first embodiment of the blind bolt recording to the present invention;
Figure 4 is a bottom view of the blind bolt of the first embodiment according to the present invention;
Figure 5 is a left side elevation view of the first embodiment of the blind bolt according to the present invention;
Figure 6 is a sectional view taken on line 6-6 of Fig. 5;
Figure 7 illustrates a preferred application of the blind bolt according to the first embodiment of the present invention;
Figure 8 is a perspective view of a second embodiment of the blind bolt according to the present invention;
Figure 9 is an elevation of the second embodiment of the blind bolt according to the present invention;

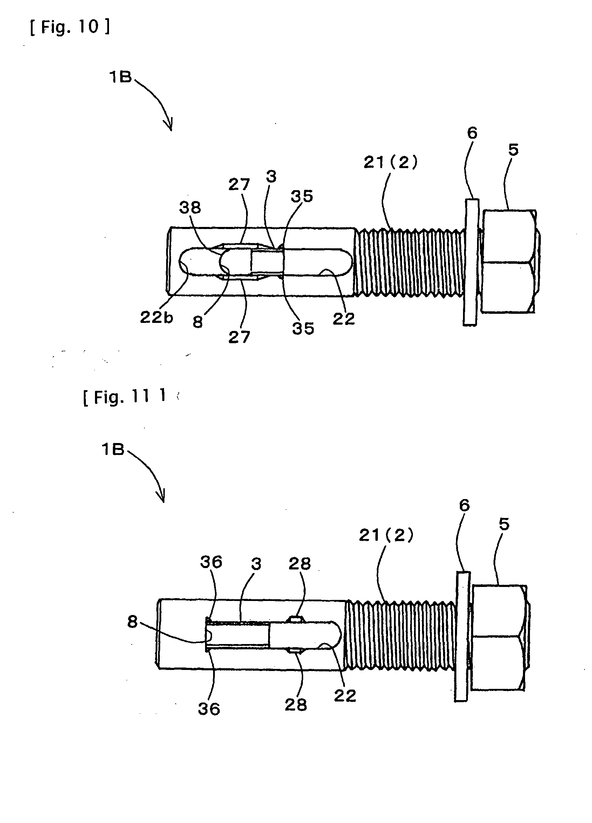

Figure 10 is a plan view of the second embodiment of the blind bolt according to the present invention;
Figure 11 is a bottom view of the second embodiment of the blind bolt according to the present invention;
Figure 12 is a left side elevation view of the second embodiment of the blind bolt according to the present invention;
Figure 13 is a sectional view taken on line 13-13 of Fig. 12;
Figure 14 illustrates a preferred application of the blind bolt according to the second embodiment of the present invention;
Figure 15 is a perspective view of a third embodiment of the blind nut according to the present invention;
Figure 16 is an elevation of the third embodiment of the blind nut according to the present invention;
Figure 17 is a plan view of the third embodiment of the blind nut according to the present invention;
Figure 18 is a bottom view of the third embodiment of the blind nut according to the present invention;

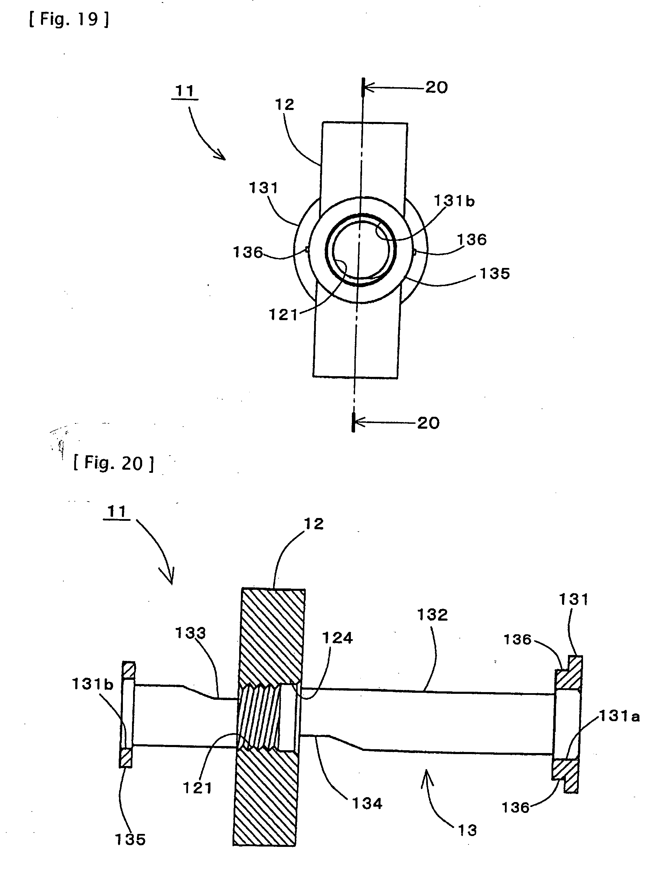

Figure 19 is a left side elevation view of the third embodiment of a blind mit according to the present invention;
Figure 20 is a sectional view taken on line 20 -20 of Fig. 19; and
Figure 21 illustrates a preferred application of the blind nut according to the third embodiment of the present invention.

### Explanation of letters and numerals

1A,1B: blind bolt
2: bolt main body
3: locking piece
5: nut
8: stepped part
11: blind mit
12: nut main body
13: nut frame body
14: bolt
21: male screw part
22: oblong hole
22a: inner surface along the axis
22b: end inner surface
27: rotation supporting groove
28: piece holding groove
29: plane
35: rotary protrusion
36: piece holding protrusion
37: chamfer
38: curved surface
121: female screw hole
122: rotary protrusion
123: nut holding protrusion
131: flange
131a, 131b: bolt Inserting hole
132: arms
133: rotation supporting groove
134: nut holding groove
135: circular frame
136: corotation preventing protrusion

## Claims

1. A blind bolt comprising:
a bolt main body having a male screw part at one end thereof and an oblong bole provided on the axis thereof at the other end; and
a locking piece to be accommodated into said oblong hole when the axis of the bolt main body is matched to the longitudinal direction of the looking piece,
said locking piece having a pair of rotary protrusions on edges of the long sides thereof projecting outwardly in a width direction of the oblong hole, and having a pair of piece holding protrusions on edges of the long sides opposite the long sides with the rotary protrusions, projecting outwardly in a width direction of the oblong hole arranged at spaced longitudinal intervals from said rotary protrusions,
said bolt main body having a pair of rotation supporting grooves on edges opposite the axis of one of the two oblong holes therein to accommodate said rotary protrusions and support rotary motion, and having a pair of piece holding grooves on edges opposite the axis of the other oblong hole to accommodate said piece holding protrusions.

2. The blind bolt set forth in Claim 1, wherein:
the rotation supporting grooves of said bolt main body are formed in a longitudinal shape axially extending towards the piece holding grooves from the position of one of the rotary protrusions with the locking piece being accommodated in the oblong hole, said rotation supporting grooves being provided with an inclined plane so as to smoothly separate said rotary protrusions.

3. The blind bolt set forth in Claim 1 or 2, wherein:
the bolt main body is provided with a stepped part on the top end of the oblong hole, the locking piece having a convex shape to be adapted to said stepped part with being placed into said oblong hole.

4. A blind nut comprising:
a nut main body having a female screw hole passing through a nearly central portion thereof; and
a nut frame body to accommodate said nut main body between a pair of arms extending parallel to each other and orthogonal to a flange having a bolt inserting hole when the longitudinal direction of the arms is matched to that of said nut main body, said nut main body having a pair of rotary protrusions on edges of the long sides thereof, projecting to be locked to the arms in the direction which is orthogonal thereto, and having a pair of nut holding protrusions on edges of the long sides opposite the edges with the rotary protrusions, projecting to be locked to the arms in the direction which is orthogonal thereto arranged at spaced longitidunal intervals from said rotary protrusions, said nut frame body having a pair of rotation supporting grooved accommodating said rotary protrusions and supporting rotary motion on edges of each arm to which said rotary protrusions abut when the longitudinal direction of the not main body is matched to that of the arms of said not frame body to accommodate the nut main body, and having a pair of not holding grooves on edges or each arm to which said not holding protrusions abut to accommodate said not holding protrusions.

5. The blind nut set forth in Claim 4, wherein:
the longitudinal distance between one of the rotary protrusions and the corresponding one of the nut holding protrusions of said nut main body is determined larger than the maximum width of the arm of the nut frame body.
